# EUROPEAN PATENT APPLICATION

(11) **EP 4 462 944 A1**
(43) Date of publication of application: **13.11.2024**
(21) Application number: 24175132.0
(22) Date of filing: 10.05.2024
(51) Int. Cl.: H04W 76/28, H04L 5/00, H04W 52/02, H04W 72/1268

(54) **HANDLING OF UPLINK TRANSMISSIONS ACCOUNTING FOR CELL DISCONTINUOUS RECEPTION**

(30) Priority: 10.05.2023 FI 20235521
(71) Applicant: Nokia Technologies Oy, 02610 Espoo (FI)
(72) Inventor: DEGHEL, Matha, 92120 Montrouge (FR); HUGL, Klaus, A-1070 Vienna (AT)
(74) Representative: Script Intellectual Property LLP

(57) **Abstract**

There is provided a user equipment comprising means for: determining at least one physical uplink shared channel that overlaps at least in part in the time domain with a cell discontinuous reception inactive time period, the at least one physical uplink shared channel being part of a set of physical uplink shared channels; excluding the determined at least one physical uplink shared channel from multiplexing operations with uplink control information of a physical uplink control channel; and based on the excluding, determining a resource to use to transmit uplink control information to a network node

## Description

### FIELD

The present application relates to a method, apparatus, system and computer program and in particular but not exclusively to performing uplink transmission accounting for cell discontinuous reception.

### BACKGROUND

A radio access network may comprise one or more access nodes and a core network. The energy consumption of the network may be split into two parts: a dynamic part, which may represent energy consumed during data transmission and reception, and a static part, which may represent energy consumed all the time to maintain the operation of radio access devices, even when transmission and/or reception are not taking place. The majority of the energy consumption of the radio access network may be due to the dynamic part.

In order to reduce the energy consumption of the network, cell discontinuous reception (DRX) may be implemented. In such cases, the cell may switch between a DRX active state, in which reception of uplink (UL) traffic from one or more network devices (such as user equipments) may take place; and a DRX inactive state, in which reception of UL traffic cannot take place. In the DRX inactive state, the energy consumption of the cell may be greatly reduced in comparison to the DRX active state.

Other methods for reducing energy consumption include multiplexing traffic together to reduce the amount of transmissions/receptions being performed. For example, in some cases uplink control information (UCI) that is normally transmitted on a physical uplink control channel (PUCCH) may be multiplexed with data being transmitted on a physical uplink shared channel (PUSCH).

However, the implementation of DRX introduces additional challenges in terms of how network devices send data to the network. For example, if UCI is multiplexed with data to be sent via PUSCH, and that PUSCH falls within a cell DRX inactive period, then the UCI may be lost. Improvements may be desired to ensure compatibility of UCI with cell DRX.

### SUMMARY

According to an aspect, there is provided a user equipment comprising means for: determining at least one physical uplink shared channel that overlaps at least in part in the time domain with a cell discontinuous reception inactive time period, the at least one physical uplink shared channel being part of a set of physical uplink shared channels; excluding the determined at least one physical uplink shared channel from multiplexing operations with uplink control information of a physical uplink control channel; and based on the excluding, determining a resource to use to transmit uplink control information to a network node.

The means may be further for: receiving, from the network node, a cell discontinuous reception configuration indicating one or more cell discontinuous reception inactive time periods and one or more cell discontinuous reception active time periods, wherein determining the at least one physical uplink shared channel that overlaps at least in part in the time domain with a cell discontinuous reception inactive time period is based on the cell discontinuous reception configuration.

Each physical uplink shared channel of the set of physical uplink shared channels may be configured or scheduled on a different component carrier or serving cell.

Each physical uplink shared channel of the set of physical uplink shared channels may overlap at least partially in the time domain with the physical uplink control channel.

The determined at least one physical uplink shared channel may further overlap in time with the physical uplink control channel.

The user equipment may be configured to simultaneously transmit physical uplink control channel and physical uplink shared channel, and wherein the means may be further for: excluding at least one further physical uplink shared channel from multiplexing when the at least one further physical uplink shared channel can be simultaneously transmitted with the physical uplink control channel.

Determining the resource to use to transmit the uplink control information to the network node may comprise: determining one or more remaining physical uplink shared channels, the one or more remaining physical uplink shared channels being one or more of the set of physical uplink shared channels are remaining after the excluding; and selecting one of the one or more remaining physical uplink shared channels with which to multiplex the uplink control information.

Each of the physical uplink shared channels may be associated with a priority, and wherein the selected one of the one or more remaining physical uplink shared channels may be selected based on the associated priorities.

The means may be further for: multiplexing the uplink control information with the selected one of the one or more remaining physical uplink shared channels; and transmitting, to the network node, the uplink control information multiplexed with the selected one of the one or more remaining physical uplink shared channels.

Determining the resource to use to transmit the uplink control information to the network node may comprise: determining that there are no remaining physical uplink shared channels after the excluding; and determining not to multiplex the uplink control information with one of the set of physical uplink shared channels.

The means may be further for: transmitting, to the network node, the uplink control information using the physical uplink control channel.

According to an aspect, there is provided a network node comprising means for: determining at least one physical uplink shared channel that overlaps at least in part in the time domain with a cell discontinuous reception inactive time period, the at least one physical uplink shared channel being part of the set of physical uplink shared channels; excluding the determined at least one physical uplink shared channel from the set of physical uplink shared channels; and based on the excluding, determining a resource to use to receive uplink control information from a user equipment.

The means may be further for: sending, to the user equipment, a cell discontinuous reception configuration indicating one or more cell discontinuous reception inactive time periods and one or more cell discontinuous reception active time periods, wherein determining the at least one physical uplink shared channel that overlaps at least in part in the time domain with a cell discontinuous reception inactive time period is based on the cell discontinuous reception configuration.

Each physical uplink shared channel of the set of physical uplink shared channels may be configured on a different component carrier.

Each physical uplink shared channel of the set of physical uplink shared channels may overlap at least partially in the time domain with the physical uplink control channel.

The determined at least one physical uplink shared channel may further overlap in time with a physical uplink control channel.

The user equipment may be configured to simultaneously transmit physical uplink control channel and physical uplink shared channel, and wherein the means is further for: excluding at least one further physical uplink shared channel when the at least one further physical uplink shared channel can be simultaneously transmitted by the user equipment with the physical uplink control channel.

Determining the resource to use to receive the uplink control information may comprise: determining one or more remaining physical uplink shared channels, the one or more remaining physical uplink shared channels being one or more of the set of physical uplink shared channels are remaining after the excluding; and selecting one of the one or more remaining physical uplink shared channels to use to receive the uplink control information.

Each of the physical uplink shared channels may be associated with a priority, and wherein the one of the one or more remaining physical uplink shared channels may be determined based on the associated priorities.

The means may be further for: receiving the uplink control information multiplexed with the selected one of the one or more remaining physical uplink shared channels.

Determining the resource to use to receive the uplink control information may comprise: determining that there are no remaining physical uplink shared channels after the excluding; and determining to receive the uplink control information using the physical uplink control channel.

The means may be further for: receiving the uplink control information using the physical uplink control channel.

According to an aspect, there is provided a user equipment comprising at least one processor and at least one memory storing instructions that, when executed by the at least one processor, cause the user equipment at least to: determine at least one physical uplink shared channel that overlaps at least in part in the time domain with a cell discontinuous reception inactive time period, the at least one physical uplink shared channel being part of a set of physical uplink shared channels; exclude the determined at least one physical uplink shared channel from multiplexing operations with uplink control information of a physical uplink control channel; and based on the excluding, determine a resource to use to transmit uplink control information to a network node.

The at least one processor may be configured to cause the user equipment to: receive, from the network node, a cell discontinuous reception configuration indicating one or more cell discontinuous reception inactive time periods and one or more cell discontinuous reception active time periods, wherein the at least one processor may be configured to cause the user equipment to determine the at least one physical uplink shared channel that overlaps at least in part in the time domain with a cell discontinuous reception inactive time period based on the cell discontinuous reception configuration.

Each physical uplink shared channel of the set of physical uplink shared channels may be configured or scheduled on a different component carrier or serving cell.

Each physical uplink shared channel of the set of physical uplink shared channels may overlap at least partially in the time domain with the physical uplink control channel.

The determined at least one physical uplink shared channel may further overlap in time with the physical uplink control channel.

The user equipment may be configured to simultaneously transmit physical uplink control channel and physical uplink shared channel, and wherein the at least one processor may be configured to cause the user equipment to: exclude at least one further physical uplink shared channel from multiplexing when the at least one further physical uplink shared channel can be simultaneously transmitted with the physical uplink control channel.

The at least one processor may be configured to cause the user equipment to: determine one or more remaining physical uplink shared channels, the one or more remaining physical uplink shared channels being one or more of the set of physical uplink shared channels are remaining after the excluding; and select one of the one or more remaining physical uplink shared channels with which to multiplex the uplink control information.

Each of the physical uplink shared channels may be associated with a priority, and wherein the selected one of the one or more remaining physical uplink shared channels may be selected based on the associated priorities.

The at least one processor may be configured to cause the user equipment to: multiplex the uplink control information with the selected one of the one or more remaining physical uplink shared channels; and transmit, to the network node, the uplink control information multiplexed with the selected one of the one or more remaining physical uplink shared channels.

The at least one processor may be configured to cause the user equipment to: determine that there are no remaining physical uplink shared channels after the excluding; and determine not to multiplex the uplink control information with one of the set of physical uplink shared channels.

The at least one processor may be configured to cause the user equipment to: transmit, to the network node, the uplink control information using the physical uplink control channel.

According to an aspect, there is provided a network node comprising at least one processor and at least one memory storing instructions that, when executed by the at least one processor, cause the network node at least to: determine at least one physical uplink shared channel that overlaps at least in part in the time domain with a cell discontinuous reception inactive time period, the at least one physical uplink shared channel being part of the set of physical uplink shared channels; exclude the determined at least one physical uplink shared channel from the set of physical uplink shared channels; and based on the excluding, determine a resource to use to receive uplink control information from a user equipment.

The at least one processor may be configured to cause the network node to: send, to the user equipment, a cell discontinuous reception configuration indicating one or more cell discontinuous reception inactive time periods and one or more cell discontinuous reception active time periods, wherein the at least one processor may be configured to cause the network node to determine the at least one physical uplink shared channel that overlaps at least in part in the time domain with a cell discontinuous reception inactive time period is based on the cell discontinuous reception configuration.

Each physical uplink shared channel of the set of physical uplink shared channels may be configured on a different component carrier.

Each physical uplink shared channel of the set of physical uplink shared channels may overlap at least partially in the time domain with the physical uplink control channel.

The determined at least one physical uplink shared channel may further overlap in time with a physical uplink control channel.

The user equipment may be configured to simultaneously transmit physical uplink control channel and physical uplink shared channel, and wherein the at least one processor may be configured to cause the network node to: exclude at least one further physical uplink shared channel when the at least one further physical uplink shared channel can be simultaneously transmitted by the user equipment with the physical uplink control channel.

The at least one processor may be configured to cause the network node to: determine one or more remaining physical uplink shared channels, the one or more remaining physical uplink shared channels being one or more of the set of physical uplink shared channels are remaining after the excluding; and select one of the one or more remaining physical uplink shared channels to use to receive the uplink control information.

Each of the physical uplink shared channels may be associated with a priority, and wherein the one of the one or more remaining physical uplink shared channels may be determined based on the associated priorities.

The at least one processor may be configured to cause the network node to: receive the uplink control information multiplexed with the selected one of the one or more remaining physical uplink shared channels.

The at least one processor may be configured to cause the network node to: determine that there are no remaining physical uplink shared channels after the excluding; and determine to receive the uplink control information using the physical uplink control channel.

The at least one processor may be configured to cause the network node to: receive the uplink control information using the physical uplink control channel.

According to an aspect, there is provided a method comprising: determining at least one physical uplink shared channel that overlaps at least in part in the time domain with a cell discontinuous reception inactive time period, the at least one physical uplink shared channel being part of a set of physical uplink shared channels; excluding the determined at least one physical uplink shared channel from multiplexing operations with uplink control information of a physical uplink control channel; and based on the excluding, determining a resource to use to transmit uplink control information to a network node.

The method may comprise: receiving, from the network node, a cell discontinuous reception configuration indicating one or more cell discontinuous reception inactive time periods and one or more cell discontinuous reception active time periods, wherein determining the at least one physical uplink shared channel that overlaps at least in part in the time domain with a cell discontinuous reception inactive time period is based on the cell discontinuous reception configuration.

Each physical uplink shared channel of the set of physical uplink shared channels may be configured or scheduled on a different component carrier or serving cell.

Each physical uplink shared channel of the set of physical uplink shared channels may overlap at least partially in the time domain with the physical uplink control channel.

The determined at least one physical uplink shared channel may further overlap in time with the physical uplink control channel.

The user equipment may be configured to simultaneously transmit physical uplink control channel and physical uplink shared channel, and wherein the method may comprise: excluding at least one further physical uplink shared channel from multiplexing when the at least one further physical uplink shared channel can be simultaneously transmitted with the physical uplink control channel.

Determining the resource to use to transmit the uplink control information to the network node may comprise: determining one or more remaining physical uplink shared channels, the one or more remaining physical uplink shared channels being one or more of the set of physical uplink shared channels are remaining after the excluding; and selecting one of the one or more remaining physical uplink shared channels with which to multiplex the uplink control information.

Each of the physical uplink shared channels may be associated with a priority, and wherein the selected one of the one or more remaining physical uplink shared channels may be selected based on the associated priorities.

The method may comprise: multiplexing the uplink control information with the selected one of the one or more remaining physical uplink shared channels; and transmitting, to the network node, the uplink control information multiplexed with the selected one of the one or more remaining physical uplink shared channels.

Determining the resource to use to transmit the uplink control information to the network node may comprise: determining that there are no remaining physical uplink shared channels after the excluding; and determining not to multiplex the uplink control information with one of the set of physical uplink shared channels.

The method may comprise: transmitting, to the network node, the uplink control information using the physical uplink control channel.

According to an aspect, there is provided a method comprising: determining at least one physical uplink shared channel that overlaps at least in part in the time domain with a cell discontinuous reception inactive time period, the at least one physical uplink shared channel being part of the set of physical uplink shared channels; excluding the determined at least one physical uplink shared channel from the set of physical uplink shared channels; and based on the excluding, determining a resource to use to receive uplink control information from a user equipment.

The method may comprise: sending, to the user equipment, a cell discontinuous reception configuration indicating one or more cell discontinuous reception inactive time periods and one or more cell discontinuous reception active time periods, wherein determining the at least one physical uplink shared channel that overlaps at least in part in the time domain with a cell discontinuous reception inactive time period is based on the cell discontinuous reception configuration.

Each physical uplink shared channel of the set of physical uplink shared channels may be configured on a different component carrier.

Each physical uplink shared channel of the set of physical uplink shared channels may overlap at least partially in the time domain with the physical uplink control channel.

The determined at least one physical uplink shared channel may further overlap in time with a physical uplink control channel.

The user equipment may be configured to simultaneously transmit physical uplink control channel and physical uplink shared channel, and wherein the method may comprise: excluding at least one further physical uplink shared channel when the at least one further physical uplink shared channel can be simultaneously transmitted by the user equipment with the physical uplink control channel.

Determining the resource to use to receive the uplink control information may comprise: determining one or more remaining physical uplink shared channels, the one or more remaining physical uplink shared channels being one or more of the set of physical uplink shared channels are remaining after the excluding; and selecting one of the one or more remaining physical uplink shared channels to use to receive the uplink control information.

Each of the physical uplink shared channels may be associated with a priority, and wherein the one of the one or more remaining physical uplink shared channels may be determined based on the associated priorities.

The method may comprise: receiving the uplink control information multiplexed with the selected one of the one or more remaining physical uplink shared channels.

Determining the resource to use to receive the uplink control information may comprise: determining that there are no remaining physical uplink shared channels after the excluding; and determining to receive the uplink control information using the physical uplink control channel.

The method may comprise: receiving the uplink control information using the physical uplink control channel.

According to an aspect, there is provided a computer readable medium comprising instructions which, when executed by a user equipment, cause the user equipment to perform at least the following: determining at least one physical uplink shared channel that overlaps at least in part in the time domain with a cell discontinuous reception inactive time period, the at least one physical uplink shared channel being part of a set of physical uplink shared channels; excluding the determined at least one physical uplink shared channel from multiplexing operations with uplink control information of a physical uplink control channel; and based on the excluding, determining a resource to use to transmit uplink control information to a network node.

The instructions, when executed, may cause the user equipment to further perform: receiving, from the network node, a cell discontinuous reception configuration indicating one or more cell discontinuous reception inactive time periods and one or more cell discontinuous reception active time periods, wherein determining the at least one physical uplink shared channel that overlaps at least in part in the time domain with a cell discontinuous reception inactive time period is based on the cell discontinuous reception configuration.

Each physical uplink shared channel of the set of physical uplink shared channels may be configured or scheduled on a different component carrier or serving cell.

Each physical uplink shared channel of the set of physical uplink shared channels may overlap at least partially in the time domain with the physical uplink control channel.

The determined at least one physical uplink shared channel may further overlap in time with the physical uplink control channel.

The user equipment may be configured to simultaneously transmit physical uplink control channel and physical uplink shared channel, and wherein the instructions, when executed, may cause the user equipment to further perform: excluding at least one further physical uplink shared channel from multiplexing when the at least one further physical uplink shared channel can be simultaneously transmitted with the physical uplink control channel.

Determining the resource to use to transmit the uplink control information to the network node may comprise: determining one or more remaining physical uplink shared channels, the one or more remaining physical uplink shared channels being one or more of the set of physical uplink shared channels are remaining after the excluding; and selecting one of the one or more remaining physical uplink shared channels with which to multiplex the uplink control information.

Each of the physical uplink shared channels may be associated with a priority, and wherein the selected one of the one or more remaining physical uplink shared channels may be selected based on the associated priorities.

The instructions, when executed, may cause the user equipment to further perform: multiplexing the uplink control information with the selected one of the one or more remaining physical uplink shared channels; and transmitting, to the network node, the uplink control information multiplexed with the selected one of the one or more remaining physical uplink shared channels.

Determining the resource to use to transmit the uplink control information to the network node may comprise: determining that there are no remaining physical uplink shared channels after the excluding; and determining not to multiplex the uplink control information with one of the set of physical uplink shared channels.

The instructions, when executed, may cause the user equipment to further perform: transmitting, to the network node, the uplink control information using the physical uplink control channel.

According to an aspect, there is provided a computer readable medium comprising instructions which, when executed by a network node, cause the network node to perform at least the following: determining at least one physical uplink shared channel that overlaps at least in part in the time domain with a cell discontinuous reception inactive time period, the at least one physical uplink shared channel being part of the set of physical uplink shared channels; excluding the determined at least one physical uplink shared channel from the set of physical uplink shared channels; and based on the excluding, determining a resource to use to receive uplink control information from a user equipment.

The instructions, when executed, may cause the network node to further perform: sending, to the user equipment, a cell discontinuous reception configuration indicating one or more cell discontinuous reception inactive time periods and one or more cell discontinuous reception active time periods, wherein determining the at least one physical uplink shared channel that overlaps at least in part in the time domain with a cell discontinuous reception inactive time period is based on the cell discontinuous reception configuration.

Each physical uplink shared channel of the set of physical uplink shared channels may be configured on a different component carrier.

Each physical uplink shared channel of the set of physical uplink shared channels may overlap at least partially in the time domain with the physical uplink control channel.

The determined at least one physical uplink shared channel may further overlap in time with a physical uplink control channel.

The user equipment may be configured to simultaneously transmit physical uplink control channel and physical uplink shared channel, and wherein the instructions, when executed, may cause the network node to further perform: excluding at least one further physical uplink shared channel when the at least one further physical uplink shared channel can be simultaneously transmitted by the user equipment with the physical uplink control channel.

Determining the resource to use to receive the uplink control information may comprise: determining one or more remaining physical uplink shared channels, the one or more remaining physical uplink shared channels being one or more of the set of physical uplink shared channels are remaining after the excluding; and selecting one of the one or more remaining physical uplink shared channels to use to receive the uplink control information.

Each of the physical uplink shared channels may be associated with a priority, and wherein the one of the one or more remaining physical uplink shared channels may be determined based on the associated priorities.

The instructions, when executed, may cause the network node to further perform: receiving the uplink control information multiplexed with the selected one of the one or more remaining physical uplink shared channels.

Determining the resource to use to receive the uplink control information may comprise: determining that there are no remaining physical uplink shared channels after the excluding; and determining to receive the uplink control information using the physical uplink control channel.

The instructions, when executed, may cause the network node to further perform: receiving the uplink control information using the physical uplink control channel.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 shows an example discontinuous transmission/reception cycle;
Figure 5 shows an example scenario for handling overlapping physical uplink control channel and physical uplink shared channel transmissions;
Figures 6a and 6b show methods according to some examples;
Figure 7 shows a signalling exchange according to some examples; and
Figure 8 shows an example scenario for handling overlapping physical uplink control channel and physical uplink shared channel transmissions

### DETAILED DESCRIPTION

A non-exhaustive list of some of the abbreviations used throughout the present disclosure is provided below for reference:
5G - 5th Generation
gNB - 5G / NR base station
NR - New Radio
RAN - Radio Access Network
UE - User Equipment
TRP - Transmission Reception Point
UL - Uplink
DL - Downlink
DCI - Downlink Control Information
MAC CE - Medium Access Control Control Element
PUCCH - Physical Uplink Control Channel
PUSCH - Physical Uplink Shared Channel
PDCCH - Physical Downlink Control Channel
PDSCH - Physical Downlink Shared Channel
TCI - Transmission Configuration Indicator
TDM - Time Division Multiplexing
UCI - Uplink Control Information
FR 1 - Frequency Range 1
SR - Scheduling Request
CSI - Channel State Information
HARQ - Hybrid Automatic Repeat request
HARQ-ACK - HARQ Acknowledgment
CCE - Control Channel Element
CORESET - Control Resource Set
SRS - Sounding Reference Signal
SRI - SRS resource indicator
SSB - Synchronization Signal Block
RS - Reference Signal
RNTI - Radio-Network Temporary Identifier
C-RNTI - Cell Radio-Network Temporary Identifier
CA - Carrier Aggregation
CG - Configured Grant
DG - Dynamic Grant
DRX - Discontinuous Reception
DTX - Discontinuous Transmission
RRC - Radio Resource Control
CC - Component Carrier

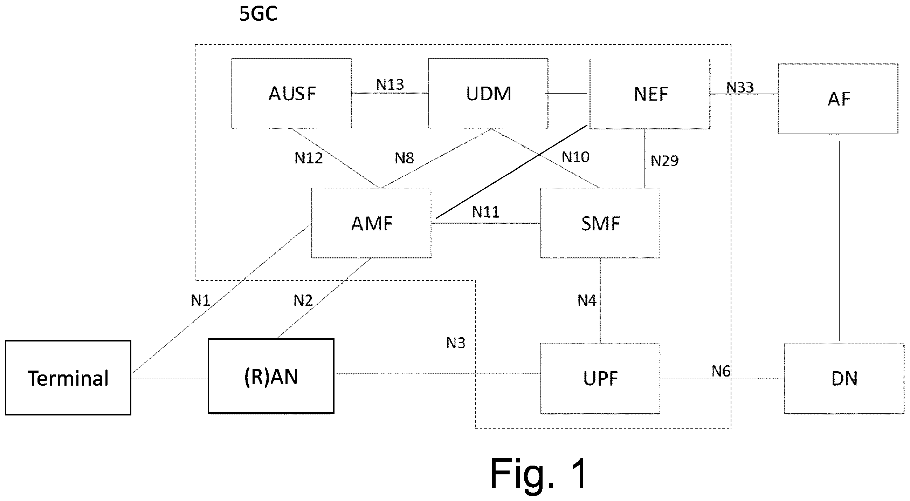

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may be comprised by a terminal or user equipment (UE), a 5G radio access network (5GRAN) or next generation radio access network (NG-RAN), a 5G core network (5GC), one or more application function (AF) and one or more data networks (DN).

The 5G-RAN may comprise one or more gNodeB (GNB) or one or more gNodeB (GNB) distributed unit functions connected to one or more gNodeB (GNB) centralized unit functions. The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF). Figure 1 also shows the various interfaces (N1, N2 etc.) that may be implemented between the various elements of the system.

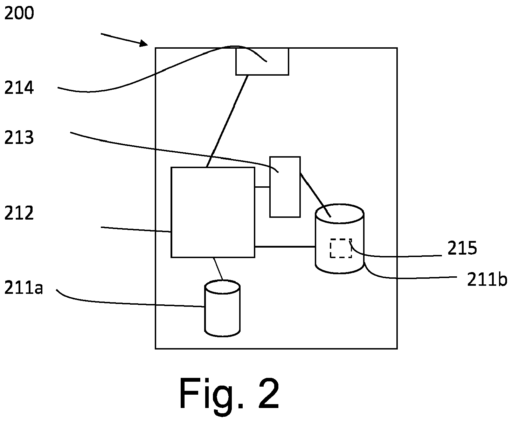

Figure 2 illustrates an example of a control apparatus 200 for controlling a function of the 5GRAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GC. In some embodiments, each function of the 5GRAN or the 5GC comprises a control apparatus 200. In alternative embodiments, two or more functions of the 5GRAN or the 5GC may share a control apparatus.

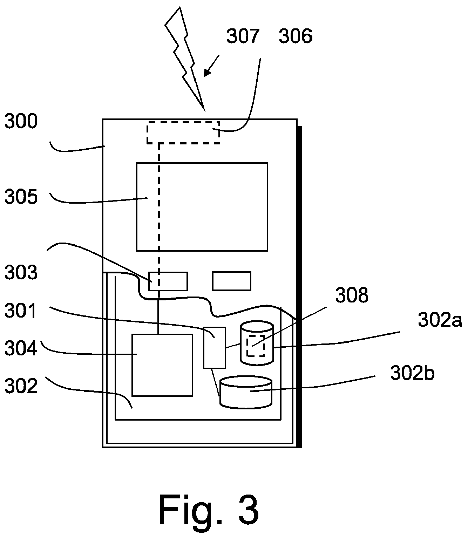

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

Network energy saving is of great importance for environmental sustainability, to reduce environmental impact and for operational cost savings. As 5G is becoming pervasive across industries and geographical areas, handling more advanced services and applications requiring very high data rates, networks are becoming denser, using more antennas, larger bandwidths and more frequency bands. The environmental impact of 5G needs to stay under control, and solutions to improve network energy savings need to be developed.

Most of the energy consumption of a 5G network may come from the radio access network and in particular from the Active Antenna Unit (AAU), with network data centres and fibre transport accounting for a smaller share. The power consumption of a radio access network can be split into two parts: a dynamic part which is only consumed when data transmission/reception is ongoing, and a static part which is consumed all the time to maintain the necessary operation of the radio access devices, even when the data transmission/reception is not on-going. It should be appreciated that reducing the static part may not be possible, otherwise the necessary operations may not be maintained. However, it may be possible to reduce the energy consumption of the dynamic part of the radio access network.

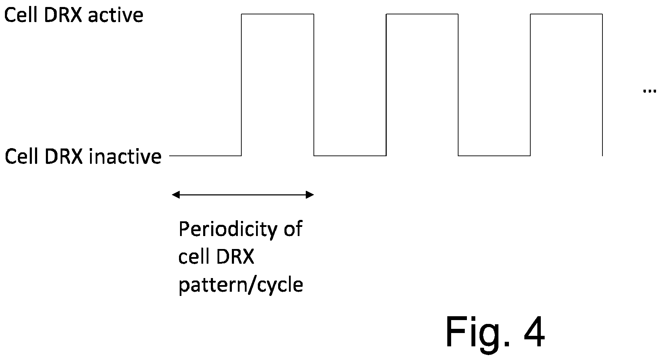

Some methods for reducing energy consumption of the radio access network may include cell discontinuous transmission (DTX) and/or discontinuous reception (DRX). Figure 4 shows an example DTX/DRX cycle, where the cell alternates between a DTX/DRX active state and a DTX/DRX inactive state. During the DTX/DRX inactive state, the power consumption of the cell may be reduced compared to the active state. Cell DTX/DRX may be applied to at least UEs in RRC_CONNECTED state. A periodic Cell DTX/DRX (i.e., active and non-active periods) can be configured by the access node (e.g. gNB) via RRC signalling to the UE.

There may be different cell behaviours during DTX/DRX non-active periods.

For example, the access node may turn off all transmission and reception for data traffic and reference signal during Cell DTX/DRX non-active periods. In another example, the access node may turn off its transmission/reception only for data traffic during Cell DTX/DRX non-active periods (i.e., access node may still transmit/receive reference signals). In yet another example, the access node may turn off its dynamic data transmission/reception during Cell DTX/DRX non-active periods (i.e., access node may still perform transmission/reception in periodic resources, including SPS, CG-PUSCH, SR, RACH, and SRS). In a final example, the access node may only transmit reference signals (e.g., CSI-RS for measurement). It should be understood that other DTX/DRX behaviours are also possible.

The Cell DTX/DRX configuration can be indicated to the UE via dynamic L1/L2 signalling (e.g. DCI, MAC, RRC signalling). The dynamic L1/L2 signalling may support a UE dedicated indication. It may be beneficial to align UE DRX with Cell DTX and DRX alignment among multiple UEs.

Uplink control information (UCI) carries control signals from the UE to the network in the uplink direction. UCI may be sent using a Physical Uplink Control Channel (PUCCH), whereas uplink data may be sent using a Physical Uplink Shared Channel (PUSCH). However, in some cases, UCI may be multiplexed with PUSCH. This can help reduce network resource usage and provide energy saving benefits.

3GPP TS 38.213 sets out multiplexing rules and conditions for when UCI multiplexing with PUSCH may be enabled for scenarios where a PUCCH(s) overlaps (in time) with a PUSCH(s).

Multiplexing of PUCCH and PUSCH(s) may be valid for CA (carrier aggregation) cases, where the PUCCH could overlap with one or more PUSCHs on different cells / CC (component carrier). Under this handling, some rules that may be used to determine the PUSCH into which the UCI/PUCCH is multiplexed include that the PUSCH on the smallest CC index among the multiple PUSCHs is considered; and that the PUSCH that starts earlier is considered (if multiple PUSCHs in the CC with smallest index).

In some examples, intra-UE prioritization and multiplexing handling procedures may be implemented to protect 'high priority' channels, where a parameter indicating the physical channel priority may be used to reflect the requirements (e.g. (latency and/or reliability) of a physical channel. In some examples, certain channels may be dropped/excluded from multiplexing based on the associated priority (e.g. dropping/excluding channels with a higher priority to ensure that the latency and/or reliability of those channels is not affected by multiplexing).

In some examples, channels with different priorities may be multiplexed, with PHY prioritization of overlapping dynamic grant (DG) PUSCH and configured grant (CG) PUSCH of different PHY priorities. In some examples, simultaneous PUCCH and PUSCH of different priorities over different cells for inter-band CA may be supported.

However, the interaction of handling overlapping UL transmissions, such as PUCCH and PUSCH (of the same or different PHY priorities) with cell DRX non-active periods may need defining to avoid ambiguity at the network side with respect UE behavior. In particular, the behavior may need defining to avoid or reduce unnecessary drops of UCI/PUCCH so that performance degradation is avoided or minimized.

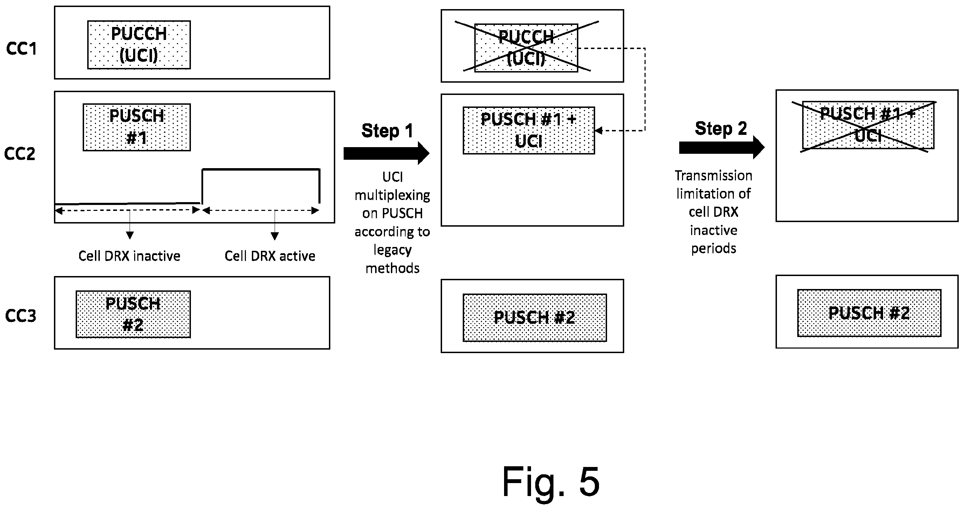

Figure 5 depicts an example scenario where the interaction between the handling of overlapping PUCCH and PDSCH according to legacy methods with cell DRX may lead to sub-optimal behaviour.

In the example of Figure 5, a carrier aggregation (CA) scenario with three UL serving cells / component carriers (CC) CC1 to CC3 is considered. A PUCCH is configured on a first CC (CC1), a first PUSCH (PUSCH1) is configured on a second CC (CC2), and a second PUSCH (PUSCH2) is configured on a third CC (CC3). The second serving cell CC2 is operating in DRX mode, where a DRX inactive period is scheduled when PUSCH1 is scheduled.

Following legacy methods for multiplexing, the UCI of the PUCCH may be multiplexed with PUSCH1. However, because PUSCH1 is scheduled during a DRX inactive period for the cell on CC2, the PUSCH1 including the multiplexed UCI (i.e., PUSCH1+UCI) is not able to be received by the network.

Some examples of the present disclosure may address one or more of the problems associated with legacy methods for multiplexing PUCCH and PDSCH while also supporting cell DRX. In the following, PUSCH without UL shared channel (such as PUSCH carrying semi-persistent CSI) and PUSCH repetitions are considered, however it should be understood that aspects of the present disclosure may not be limited to any specific type of PUSCH.

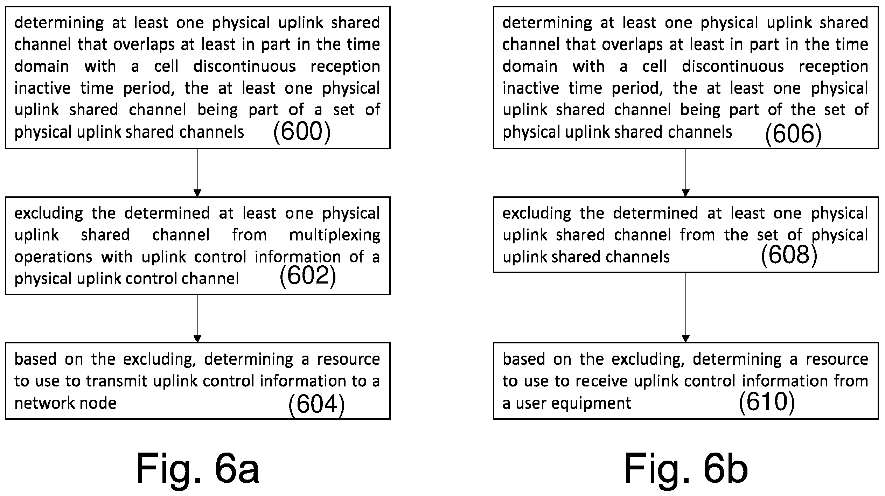

Reference is made to Figures 6a and 6b, which show methods according to some examples.

With reference to Figure 6a, a method is shown that may in some examples be performed by a user equipment.

At 600, the method comprises determining at least one physical uplink shared channel that overlaps at least in part in the time domain with a cell discontinuous reception inactive time period, the at least one physical uplink shared channel being part of a set of physical uplink shared channels.

At 602, the method comprises excluding the determined at least one physical uplink shared channel from multiplexing operations with uplink control information of a physical uplink control channel.

At 604, the method comprises, based on the excluding, determining a resource to use to transmit uplink control information to a network node.

With respect to Figure 6b, a method is shown that may in some examples be performed by a network node.

At 606, the method comprises determining at least one physical uplink shared channel that overlaps at least in part in the time domain with a cell discontinuous reception inactive time period, the at least one physical uplink shared channel being part of the set of physical uplink shared channels.

At 608, the method comprises excluding the determined at least one physical uplink shared channel from the set of physical uplink shared channels.

At 610, the method comprises, based on the excluding, determining a resource to use to receive uplink control information from a user equipment.

Some examples may relate to a UE in a cell configured with a cell DRX pattern/cycle configuration comprising cell DRX inactive periods and cell DRX active periods.

In some examples, a set of PUSCHs (i.e. two or more PUSCHs) may overlap with at least one PUCCH. As used herein, "overlapping" PUCCH and PUSCH(s) is understood as meaning overlapping, at least partially, in the time domain. Each PUSCH may be on different serving cells or component carriers, and may be on different serving cells or component carriers than the PUCCHs.

In some examples, before prioritizing and/or multiplexing overlapping PUCCH and PDSCH, the UE may be configured to drop or exclude, from further processing (e.g. multiplexing), at least one PUSCH of the set of PUSCHs that would overlap in time with the at least one PUCCH if the at least one PUSCH overlaps with a cell DRX inactive period.

In some examples the UE may be configured to exclude at least one PUSCH which overlaps with a cell DRX inactive period before handling, i.e., prioritizing and/or multiplexing, overlapping PUCCH and PUSCH (i.e. the excluded PUSCH may not need to overlap with the PUCCH to be dropped or excluded from further processing).

In some examples, the UE may be configured to simultaneously transmit PUCCH and PUSCH. In some examples, the UE may be configured to further remove or exclude one or more PUSCHs from multiplexing with PUCCH if the one or more PUSCHs may be simultaneously transmitted with the PUCCH.

In some examples, the UE may handle or process the PUCCH and the remaining (non-dropped or non-excluded) overlapping PUSCHs of the set of PUSCHs. For example the UE may multiplex the UCI(s) carried in the PUCCH into one of the remaining PUSCHs of the set of PUSCHs. The processing may be based on the rules set out in 3GPP TS 38.213.

For example, when a PUCCH overlaps with multiple PUSCHs, the UE may determine one PUSCH for UCI multiplexing based on one or more of:
- A PUSCH with a channel state information (CSI) report may be prioritized over a PUSCH without a CSI report;
- A DG PUSCH may be prioritized over a CG PUSCH;
- A PUSCH with a smaller cell index may be prioritized over a PUSCH with a larger cell index;
- A PUSCH with an earlier starting symbol may be prioritized over a PUSCH with a later starting symbol.

In some examples, a low priority PUCCH or PUSCH may be dropped if it overlaps with a high priority PUCCH or PUSCH.

The UE may then transmit the multiplexed PUCCH and PUSCH (i.e. the PUSCH+UCI) to a network node, such as a gNB.

In some examples, if the PUCCH is not multiplexed into one of the remaining PUSCHs of the set of PUSCHs, the UE may send the PUCCH and the remaining PUSCHs to the network if the PUCCH overlaps with a DRX active period. However, if the PUCCH overlaps with a DRX inactive period, the UE may drop the UCI(s) carried in the PUCCH along with the PUCCH.

In some examples a PUSCH may be corresponding to an UL grant without or with UL shared channel, e.g., PUSCH only containing CSI or a configured grant (CG) PUSCH. A PUSCH may be a repetition of a PUSCH transmission.

In some examples, UCI(s) carried on the PUCCH may be at least one of: CSI (channel state information), SR (scheduling request), HARQ-ACK. The PUCCH may be a repetition of a PUCCH transmission.

The PUSCHs and the PUCCH may be of a same PHY priority or of a different PHY priorities. The PHY priority may indicate the different service types at the PHY layer and/or MAC layer.

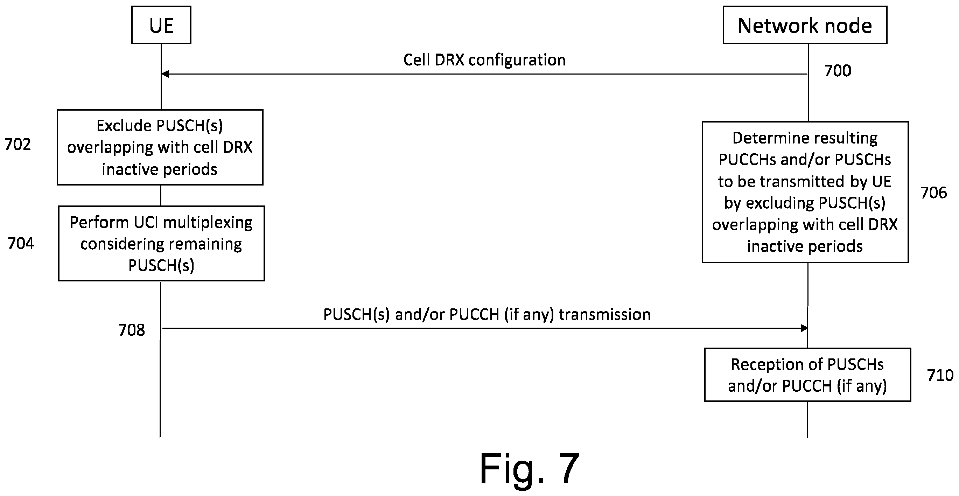

Reference is made to Figure 7, which shows a signalling exchange according to some examples. In the example of Figure 7, it is assumed that the UE is configured with at least one PUCCH and two or more PUSCHs, i.e. a set of PUSCHs.

At 700, a network node (such as an access node, e.g. gNB) sends, to a UE, a cell DRX configuration. The cell DRX configuration may indicate a time period where the cell is in DRX inactive mode and a time period where the cell is in DRX active mode.

At 702, the UE excludes at least one PUSCH from multiplexing operations with UCI of the PUCCH. In some examples the UE may determine the at least one PUSCH to exclude based on determining that the at least one PUSCH overlaps at least in part in the time domain with a cell discontinuous reception inactive time period. The determination may be based on the received cell DRX configuration.

As stated above, in some examples, the UE may be configured to simultaneously transmit PUCCH and PUSCH. In such examples, as part of step 702 the UE may be configured to further remove or exclude one or more PUSCHs from multiplexing with PUCCH if the one or more PUSCHs may be simultaneously transmitted with the PUCCH.

At 704, the UE may perform UCI multiplexing considering the remaining PUSCH(s). For example, the UE may multiplex the UCI with a remaining PUSCH according to the rules described previously and/or rules set out in 3GPP TS 38.213.

If after step 702 there are no remaining PUSCHs with which to multiplex the UCI, then step 704 may be omitted.

At 706, after sending the cell DRX configuration at 700 and before step 708, the network node may determine one or more resulting PUCCHs and/or PUSCHs that are to be transmitted by the UE. In some examples, the network may exclude PUSCH(s) overlapping with cell DRX inactive periods in the same manner as the UE in step 702.

At 708, the UE sends one or more PUSCH(s) and/or PUCCH to the network node.

When there are one or more PUSCHs available after the excluding at 702, the UE may send the PUSCH on which the UCI was multiplexed. The UE may also transmit any other PUSCH(s) that have not been multiplexed with the UCI and that are not in a cell DRX inactive period.

As stated above, in some examples, one or more PUCCHs may not have been multiplexed at step 704. For example, there may not have been a remaining PUSCH on which to multiplex the UCI after step 702.

In such cases, the UE may optionally transmit the UCI on one or more PUCCHs that have not been multiplexed as part of step 708. In such cases, if the UE is configured to transmit PUSCH and PUCCH simultaneously, the UE may transmit the UCI on PUCCH and PUSCH as part of step 708.

At 710, the network node receives the PUSCH(s) (and optionally PUCCH(s) if any are transmitted separately) transmitted by the UE at 708.

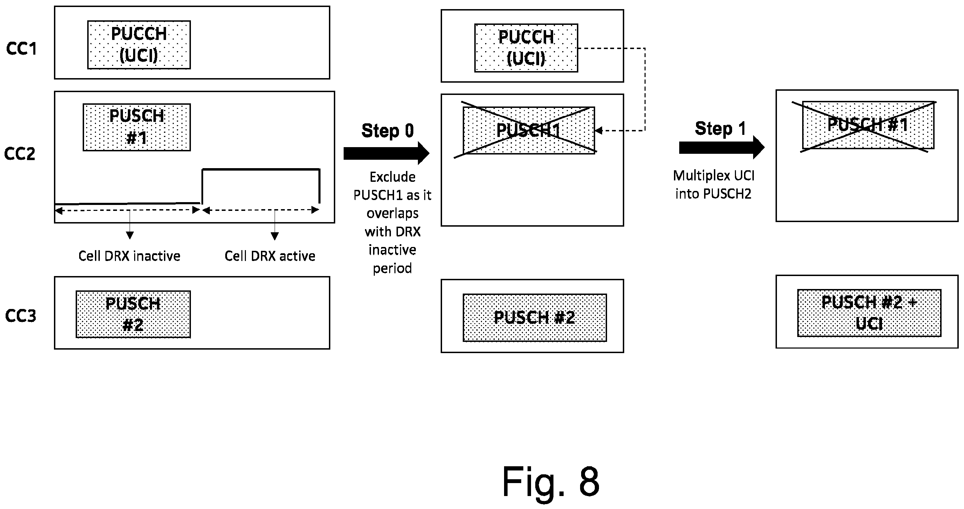

Reference is made to Figure 8 which depicts a similar example scenario to that in Figure 5, but where the handling of overlapping PUCCH and PDSCH is implemented according to examples of the present disclosure.

To re-iterate, in the example of Figure 8, a PUCCH is configured on a first CC (CC1), a first PUSCH (PUSCH1) is configured on a second CC (CC2), and a second PUSCH (PUSCH2) is configured on a third CC (CC3). The cell on CC2 is operating in DRX mode, where a DRX inactive period is scheduled when PUSCH1 is scheduled.

According to examples of the present disclosure, because PUSCH1 falls within a DRX inactive period for the cell of CC2, PUSCH1 is dropped or excluded from multiplexing with UCI by the UE. Accordingly, when the UE then handles the overlapping of PUCCH on CC1 and PUSCH2 on CC3, the UE may be configured to multiplex the UCI from PUCCH into one of the remaining PUSCHs, i.e. PUSCH2 on CC3. The UE may then transmit PUSCH2 including the multiplexed UCI (i.e., PUSCH2+UCI) on CC3.

As such, examples of the present disclosure may avoid the loss of UCI when handling overlapping PUCCH and PUSCH when DRX is configured on one of the PUSCH of a set of PUSCHs. Some examples may therefore improve network reliability while also allowing for a reduction in network energy consumption.

In some examples, a user equipment may comprise means for: determining at least one physical uplink shared channel that overlaps at least in part in the time domain with a cell discontinuous reception inactive time period, the at least one physical uplink shared channel being part of a set of physical uplink shared channels; excluding the determined at least one physical uplink shared channel from multiplexing operations with uplink control information of a physical uplink control channel; and based on the excluding, determining a resource to use to transmit uplink control information to a network node.

In some examples the user equipment may comprise at least one processor and at least one memory storing instructions that, when executed by the at least one processor, cause the user equipment at least to: determine at least one physical uplink shared channel that overlaps at least in part in the time domain with a cell discontinuous reception inactive time period, the at least one physical uplink shared channel being part of a set of physical uplink shared channels; exclude the determined at least one physical uplink shared channel from multiplexing operations with uplink control information of a physical uplink control channel; and based on the excluding, determine a resource to use to transmit uplink control information to a network node.

In some examples, a network node may comprise means for: determining at least one physical uplink shared channel that overlaps at least in part in the time domain with a cell discontinuous reception inactive time period, the at least one physical uplink shared channel being part of the set of physical uplink shared channels; excluding the determined at least one physical uplink shared channel from the set of physical uplink shared channels; and based on the excluding, determining a resource to use to receive uplink control information from a user equipment.

In some examples the network node may comprise at least one processor and at least one memory storing instructions that, when executed by the at least one processor, cause the network node at least to: determine at least one physical uplink shared channel that overlaps at least in part in the time domain with a cell discontinuous reception inactive time period, the at least one physical uplink shared channel being part of the set of physical uplink shared channels; exclude the determined at least one physical uplink shared channel from the set of physical uplink shared channels; and based on the excluding, determine a resource to use to receive uplink control information from a user equipment.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. A user equipment comprising means for:
determining at least one physical uplink shared channel that overlaps at least in part in the time domain with a cell discontinuous reception inactive time period, the at least one physical uplink shared channel being part of a set of physical uplink shared channels;
excluding the determined at least one physical uplink shared channel from multiplexing operations with uplink control information of a physical uplink control channel; and
based on the excluding, determining a resource to use to transmit uplink control information to a network node.

2. The user equipment of claim 1, wherein the means is further for:
receiving, from the network node, a cell discontinuous reception configuration indicating one or more cell discontinuous reception inactive time periods and one or more cell discontinuous reception active time periods, wherein determining the at least one physical uplink shared channel that overlaps at least in part in the time domain with a cell discontinuous reception inactive time period is based on the cell discontinuous reception configuration.

3. The user equipment of any preceding claim, wherein the determined at least one physical uplink shared channel further overlaps in time with the physical uplink control channel.

4. The user equipment of any preceding claim, wherein the user equipment is configured to simultaneously transmit physical uplink control channel and physical uplink shared channel, and wherein the means is further for:
excluding at least one further physical uplink shared channel from multiplexing when the at least one further physical uplink shared channel can be simultaneously transmitted with the physical uplink control channel.

5. The user equipment of any preceding claim, wherein determining the resource to use to transmit the uplink control information to the network node comprises:
determining one or more remaining physical uplink shared channels, the one or more remaining physical uplink shared channels being one or more of the set of physical uplink shared channels are remaining after the excluding; and
selecting one of the one or more remaining physical uplink shared channels with which to multiplex the uplink control information.

6. The user equipment of claim 5, wherein the means is further for:
multiplexing the uplink control information with the selected one of the one or more remaining physical uplink shared channels; and
transmitting, to the network node, the uplink control information multiplexed with the selected one of the one or more remaining physical uplink shared channels.

7. The user equipment of any of claims 1 to 4, wherein determining the resource to use to transmit the uplink control information to the network node comprises:
determining that there are no remaining physical uplink shared channels after the excluding; and
determining not to multiplex the uplink control information with one of the set of physical uplink shared channels.

8. The user equipment of claim 7, wherein the means is further for:
transmitting, to the network node, the uplink control information using the physical uplink control channel.

9. A network node comprising means for:
determining at least one physical uplink shared channel that overlaps at least in part in the time domain with a cell discontinuous reception inactive time period, the at least one physical uplink shared channel being part of the set of physical uplink shared channels;
excluding the determined at least one physical uplink shared channel from the set of physical uplink shared channels; and
based on the excluding, determining a resource to use to receive uplink control information from a user equipment.

10. The network node of claim 9, wherein the means is further for:
sending, to the user equipment, a cell discontinuous reception configuration indicating one or more cell discontinuous reception inactive time periods and one or more cell discontinuous reception active time periods, wherein determining the at least one physical uplink shared channel that overlaps at least in part in the time domain with a cell discontinuous reception inactive time period is based on the cell discontinuous reception configuration.

11. The network node of any of claims 9 to 10, wherein the determined at least one physical uplink shared channel further overlaps in time with a physical uplink control channel.

12. The network node of any of claims 9 to 11, wherein the user equipment is configured to simultaneously transmit physical uplink control channel and physical uplink shared channel, and wherein the means is further for:
excluding at least one further physical uplink shared channel when the at least one further physical uplink shared channel can be simultaneously transmitted by the user equipment with the physical uplink control channel.

13. The network node of any of claims 9 to 12, wherein determining the resource to use to receive the uplink control information comprises:
determining one or more remaining physical uplink shared channels, the one or more remaining physical uplink shared channels being one or more of the set of physical uplink shared channels are remaining after the excluding; and
selecting one of the one or more remaining physical uplink shared channels to use to receive the uplink control information.

14. The network node of claim 13, wherein the means is further for:
receiving the uplink control information multiplexed with the selected one of the one or more remaining physical uplink shared channels.

15. The network node of any of claims 9 to 12, wherein determining the resource to use to receive the uplink control information comprises:
determining that there are no remaining physical uplink shared channels after the excluding; and
determining to receive the uplink control information using the physical uplink control channel, and preferably wherein the means is further for:
receiving the uplink control information using the physical uplink control channel.
